# DEMANDE DE BREVET EUROPEEN

(11) **EP 1 054 023 A1**
(43) Date de publication de la demande: **22.11.2000**
(21) Numéro de dépôt: 00401260.5
(22) Date de dépôt: 09.05.2000
(51) Int. Cl.: C08F 8/06, C08F 8/26, C08J 7/12, C08C 19/04

(54) **Procédé de modification chimique de polymères fluorés électrodes de batterie lithium-ion et revètement de substrats métallique comportant ces polymères ainsi modifiés**

(30) Priorité: 21.05.1999 FR 9906470
(71) Demandeur: Atofina, 92800 Puteaux (FR)
(72) Inventeur: Pascal, Thierry, 69390 Charly (FR)
(74) Mandataire: Neel, Henry

(57) **Abrégé**

Ce procédé comprend une étape de modification chimique d'un polymère fluoré partiellement déshydrofluoré, consistant en sa mise en réaction ou sa mise en contact avec un agent oxydant, notamment le peroxyde d'hydrogène ou un hypochlorite. Le polymère fluoré résultant a des propriétés d'adhésion très élevées, notamment à des substrats métalliques ou polymériques. Ce polymère fluoré est un liant dans la fabrication d'électrodes de batteries lithium-ion.

## Description

La présente invention concerne les procédés de traitement chimique des polymères fluorés ainsi que les traitements de surface d'objets notamment films constitués par des polymères fluorés, ainsi que les produits ou objets obtenus par ces procédés.

De tels procédés sont déjà connus dans la littérature.

Ainsi, les demandes de brevet WO 98/08879 et WO 98/08880 enseignent un procédé pour améliorer, d'une part, l'aptitude à la vulcanisation des élastomères fluorés, et d'autre part, l'adhésion entre un fluoropolymère et un substrat hydrocarboné. Ce procédé comporte une étape de déshydrofluoration du fluoropolymère par l'action d'une base. Le fluoropolymère peut être un fluoroplastique ou un fluoroélastomère, dans la mesure où ils contiennent des motifs de formule générale (I): 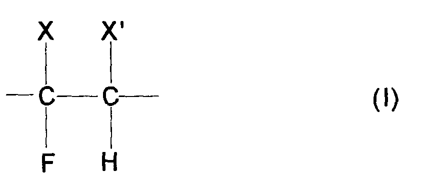 dans laquelle, X et X' peuvent être indépendamment l'un de l'autre un atome d'hydrogène, un atome de fluor ou un groupe électroattracteur tel qu'un groupe fluoroalkyle par exemple trifluorométhyle ou pentafluoroéthyle ou encore un groupe nitrile. De préférence au moins un de X et X' est un fluor. De préférence, un au moins des groupes X et X', est perfluoré, et si non perfluoré, possède des atomes de fluor situés le plus près possible du squelette du fluoropolymère.

Les fluoropolymères utilisables peuvent être préparés par polymérisation ou copolymérisation de monomères insaturés oléfiniques. Pour obtenir un fluoropolymère ayant le motif de la formule (I), le monomère et/ou les comonomères doivent comporter à la fois des atomes de fluor liés à des atomes de carbones et des atomes d'hydrogènes liés à des atomes de carbones voisins. Par exemple les fluoropolymères utilisables peuvent être des homopolymères préparés à partir de monomères hydrofluorocarbonés, ou peuvent être des copolymères dérivant de monomères insaturés perhalogénées copolymérisés avec un ou plusieurs monomères insaturés contenant l'hydrogène -H, à savoir un monomère hydrofluorocarboné et/ou un monomère non fluoré.

Comme exemples de monomères insaturés oléfiniques utilisables on peut citer l'hexafluoropropylène (HFP), le tetrafluoroéthylène (TFE), le fluorure de vinylidène (VF₂) le chlorotrifluoroéthylène (CTFE), les 2-chloropentafluoropropène, les éthers vinyliques perfluoroalkyle tels que CF₃--O-CF=CF₂ ou CF₃-CF₂-O-CF=CF₂, le 1-hydropentafluoropropène, le 2-hydro-pentafluoropropène, le dichlorodifluoroéthylène, le trifluoroéthylène, le 1,1-dichlorofluoroéthylène, et les perfluoro-1,3-dioxoles tels que ceux décrits dans US 4 558 142, et les monomères insaturés oléfiniques ne comportant pas de fluor tels que l'éthylène, le propylène, le butylène et homologues supérieurs.

Les dioléfines contenant du fluor peuvent être utilisées, par exemple les dioléfines telles que l'éther perfluorodiallyle et le perfluoro-1,3-butadiène.

Les monomères ou comonomères insaturés oléfiniques peuvent être polymérisés pour obtenir un fluoropolymère par les procédés connus dans l'état de la technique des fluoropolymères.

En particulier, en ce qui concerne les procédés de synthèse de poly(fluorure de vinylidène) (PVDF), les brevets US 3553185 et EP 0120524 décrivent des procédés de synthèse du PVDF par mise en suspension aqueuse du fluorure de vinylidène (VF₂)et sa polymérisation. Les brevets US 4025709, US 4569978, US 4360652, EP 626396 et EP 0655468 décrivent les procédés de synthèse du PVDF par mise en émulsion aqueuse du VF₂ et sa polymérisation.

En général, les monomères fluorés insaturés oléfiniques peuvent être polymérisés et éventuellement copolymérisés avec des monomères oléfiniques non fluorés dans des émulsions aqueuses. Les émulsions contiennent par exemple un amorceur soluble dans l'eau tels qu'un persulfate de métal alcalin ou d'ammonium ou encore un permanganate de métal alcalin, lesquels produisent des radicaux libres, et contiennent également un ou plusieurs émulsifiants tels que les sels de métaux alcalins ou d'ammonium d'un acide perfluorooctanoïque.

D'autres procédés en suspension colloïdales aqueuse utilisent des amorceurs essentiellement solubles dans la phase organique, tels que des peroxydes de dialkyle, des hydroperoxydes d'alkyle, des peroxydicarbonates de dialkyle ou des azoperoxydes, l'amorceur étant associé à des colloïdes du type méthylcelluloses, méthyl-hydroxypropyl celluloses, méthyl-propyl celluloses et méthyl-hydroxyéthyl celluloses.

De nombreux polymères et copolymères fluorés sont commerciaux notamment ceux de la Société ELF ATOCHEM S.A. sous la marque KYNAR®.

Les procédés enseignés ou rappelés dans WO 98/08879 et WO 98/08880 consistent à déshydrofluorer une partie des motifs de formule (I) pour donner par élimination de HF des motifs de formule (II):

-CX=CX'- II

X et X' ayant les significations ci-dessus.

On obtient ainsi des fluoropolymères contenant dans leurs chaînes principales des doubles liaisons du type oléfinique. Cette déshydrofluoration d'un polymère fluoré est obtenu par une base en milieux aqueux ou dans un solvant organique. Les bases utilisables sont citées dans WO 98/08880. Elles peuvent être, par exemple, un hydroxyde tel que l'hydroxyde de potassium (KOH), l'hydroxyde d'ammonium (NH₄OH), l'hydroxyde de sodium (NaOH), l'hydroxyde de lithium (LiOH), un carbonate tel que le carbonate de potassium (K₂CO₃)ou le carbonate de sodium (Na₂CO₃), une amine tertiaire, un hydroxyde de tétraalkylammonium, un alcoolate métallique.

Un procédé de déshydrofluoration en milieu aqueux d'une émulsion de fluoropolymère est également décrit dans la demande de brevet WO 98/08879.

Il est connu également de WO 98/08879 de déshydrofluorer la surface d'un film de fluoropolymère par un traitement basique de cette surface. Ce traitement basique de surface est décrit comme effectué à l'aide d'une solution d'un composé basique, éventuellement en présence d'un catalyseur. Ce composé basique peut être l'éthylamine, un hydroxyde tel que l'hydroxyde de potassium (KOH), l'hydroxyde d'ammonium (NH₄OH), l'hydroxyde de sodium (NaOH), l'hydroxyde de lithium (LiOH) ou encore un carbonate tel que le carbonate de potassium (K₂CO₃)ou le carbonate de sodium (Na₂CO₃). Le catalyseur peut être, par exemple, le bromure de tétrabutylammonium (TBAB), les halogénures de tétraalkylphosphonium, de alkylarylphosphonium, d'alkylammonium et d'alkylphosphonium. Le composé basique et le catalyseur éventuel peuvent être dissous ou dilués dans un solvant tel que le naphtalène, le tétrahydrofuranne (THF) et l'eau.

Les avantages de déshydrofluorer seulement le fluoropolymère en surface est que la majorité du fluoropolymère présent n'est pas déshydrofluoré et garde ainsi ses propriétés physiques initiales.

Ces polymères fluorés contenant des doubles liaisons présentent une meilleure adhésion à des substrats hydrocarbonés de préférence essentiellement non fluorés tels que polycarbonate, polyamide, polyuréthane, polyimide, polyoléfine ou polyoléfines fonctionnalisées par des groupes carboxyle anhydride ou imide.

Le brevet US 4758618 décrit des compositions réticulables à base de copolymère de fluorure de vinylidène modifié chimiquement par une base pour y introduire des liaisons insaturées.

L'exemple 1 consiste à introduire goutte à goutte un latex d'un terpolymère fluorure de vinylidène / tétrafluoroéthylène / propylène dans une solution aqueuse de soude de façon à obtenir des particules coagulées d'une taille inférieure à 10 mm puis à introduire du bromure de tétra-n-butylammonium pour activer la formation des liaisons insaturées.

Par ailleurs, il est connu que les polymères ou copolymères fluorés, notamment ceux obtenus à partir de fluorure de vinylidène (VF₂) présentent généralement des caractéristiques insuffisantes suivantes :
- une faible adhésion à un substrat en métal (notamment cuivre ou aluminium) ou en polymère lorsqu'ils sont en film ou en couche recouvrant ledit substrat,
- une faible compatibilité ou miscibilité avec des matériaux tels que charges minérales ou organiques ou encore avec des polymères hydrocarbonés non fluorés,
- une faible réactivité envers différents types de fonctions chimiques portées par des substrats minéraux ou organiques.

De même, les fluoropolymères déshydrofluorés décrits dans WO 98/08879 et WO 98/08880 sont présentés comme ayant des propriétés d'adhésion améliorées vis à vis de substrats hydrocarbonés par rapport aux fluoropolymères correspondants avant cette déshydrofluoration. Cependant la Demanderesse a constaté que ces propriétés d'adhésion sont encore insuffisantes pour certaines applications techniques et que la solubilité de ces fluoropolymères déshydrofluorés dans les solvants est en général fortement diminuée, notamment pour les taux élevés de déshydrofluoration. Cette diminution de la solubilité par exemple dans la diméthylformamide (DMF) ou la N-méthylpyrrolidinone (NMP) du PVDF déshydrofluoré ou de ses copolymères déshydrofluorés présente un inconvénient important pour leur utilisation éventuelle dans certaines technologies de mise en oeuvre utilisant ces solutions, par exemple la fabrication des électrodes de batterie lithium-ion.

Dans la réalisation des les batteries lithium-ion, la couche électroactive contenant soit des charges d'oxydes mixtes soit des charges de carbones et/ou de graphite, avec d'autres ingrédients pour régler les performances électriques, est réalisée en général par dispersion des charges dans un solvant en présence d'un liant polymérique. La dispersion ainsi obtenue est déposée sur un collecteur métallique par une méthode de "Cast", le solvant est ensuite évaporé pour obtenir une électrode négative ou positive selon les charges utilisées.

Les collecteurs métalliques utilisés sont en général des feuilles ou des grilles de cuivre dans le cas de l'électrode négative et d'aluminium dans le cas de l'électrode positive.

Le liant polymérique assure la cohésion de la couche électroactive ainsi que l'adhésion sur le collecteur métallique. Cette cohésion et cette adhésion sont nécessaires pour la bonne réalisation des batteries.

Une mauvaise cohésion de la couche ne permet pas par exemple d'enrouler ou d'empiler les électrodes au sein de la structure multicouche de la batterie sans avoir un effritement préjudiciable du matériau électroactif.

Cet inconvénient majeur est également obtenu lorsque l'adhésion au collecteur est insuffisante.

Les performances de la batterie dépendent étroitement des caractéristiques du liant. Un bon liant permet de réaliser des couches suffisamment chargées en ingrédients électroactifs par rapport à la quantité de liant nécessaire et permet ainsi d'avoir une capacité spécifique élevée. Le liant doit également être stable vis à vis des réactions d'oxydo-réductions lors des cycles de charges et de décharges et doit être également insensible à l'électrolyte présent dans la batterie. Cet électrolyte contient typiquement des solvants de type carbonate comme le carbonate de propylène, d'éthylène, de diméthyle éthyle et un sel de lithium comme LiPF₆ ou LiBF₄.

Le PVDF ou les copolymères du VF₂ sont des matériaux qui possèdent les caractéristiques pour leur utilisation en tant que liants de batterie au lithium mais le besoin existe d'obtenir d'autres liants ayant une adhésion et une cohésion plus élevées tout en conservant les propriétés de stabilité électrochimique.

La présente invention a pour premier but de fournir un procédé de modification chimique d'un polymère fluoré contenant des motifs de formule générale (I) : 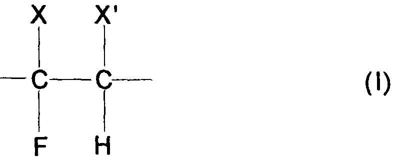 dans laquelle X et X' peuvent être indépendamment l'un de l'autre un atome d'hydrogène, un halogène notamment le fluor ou le chlore, un alkyl perhalogéné notamment perfluoré, afin de rendre le polymère ainsi chimiquement modifié plus adhérant à des substrats métalliques notamment en cuivre ou en aluminium.

Un deuxième but de la présente invention est d'obtenir un film de polymère fluoré, ce film ayant une ou plusieurs faces externes modifiées chimiquement sans que le coeur du film soit chimiquement modifié, chaque face modifiée chimiquement présentant une meilleure adhésion à un substrat métallique (notamment en cuivre ou en aluminium) que le polymère fluoré initial.

Un troisième but est d'obtenir un polymère fluoré modifié chimiquement et présentant des propriétés améliorées de liant dans les batteries lithium-ion.

Les buts ci-dessus sont atteints par le procédé selon la présente invention comprenant une étape de modification chimique d'un polymère fluoré partiellement déshydrofluoré par sa mise en contact avec un agent oxydant

Plus précisément, la présente invention consiste en un procédé de modification chimique d'un polymère fluoré (PF1) contenant des motifs de formule générale (I): 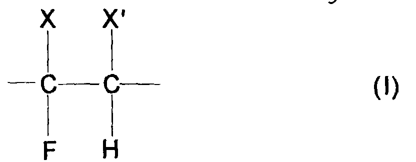 dans laquelle X et X' peuvent être indépendamment l'un de l'autre un atome d'hydrogène, un halogène notamment le fluor ou le chlore, un alkyl perhalogéné notamment perfluoré dans lequel on soumet ce polymère fluoré à une déshydrofluoration partielle par une base, caractérisé en ce que l'on fait réagir ensuite le fluoropolymère ainsi partiellement déshydrofluoré avec un agent oxydant pour donner un nouveau polymère fluoré (PF2).

La base mise en oeuvre peut être une de celles citées ci-dessus, avec ou sans catalyseur, et rapportées dans WO98/08879 ou WO98/08880. La base peut être également un dérivé aminé à structure hydrocarbonée soluble ou partiellement soluble dans l'eau ou les solvants organiques, notamment le 1,8-Diazabicyclo[5.4.0]undéc-7-ène (DBU) ou le 1,4-Diazabicyclo[2.2.2]octane (DABCO).

De préférence, le polymère fluoré (PF1) est sous la forme d'une dispersion aqueuse, telle qu'une émulsion ou une suspension. Cette dispersion peut être le produit résultant d'une des méthodes de synthèses rappelées ci-dessus. Dans cette forme de l'invention le polymère fluoré modifié (PF2) qu'on obtient par le procédé de l'invention est sous forme de poudre. Cette poudre peut être humidifiée puis granulée par passage sous contrainte mécanique au travers d'une filière. On obtient ainsi des granulés de taille comprise entre 200 µm et 10 mm dont le volume cumulé des pores est compris entre 0,2 et 2ml/g. La présente invention concerne aussi ces granulés.

Elle concerne aussi un procédé de préparation de ces granulés qui comprend :
(i) l'ajustement de la teneur en eau de la poudre obtenue par essorage de la dispersion résultant de l'étape finale du procédé de synthèse, de manière à obtenir une poudre de 10 à 45% d'eau, de préférence 20 à 35%
(ii) la granulation par passage , sous contrainte mécanique, de la poudre humidifiée au travers d'une filière dont l'épaisseur e et le diamètre des perforations d sont tels que le rapport e/d est compris entre 0,5 et 3, de préférence entre 0,5 et 2, le diamètre d étant voisin de la taille désirée pour les granulés.
Dans l'étape (i) le pourcentage d'eau de la poudre correspond au rapport poids d'eau/ poids de la poudre humide
Dans l'étape (ii) du procédé selon l'invention, le passage de la poudre humidifiée au travers de la filière est effectuée par exemple par une presse granulatrice, dans laquelle la poudre est poussée contre la filière au moyen de pales rotatives.

Le procédé suivant la présente invention est également applicable pour modifier chimiquement la surface d'un objet. Ainsi, en variante on obtient un procédé de modification chimique de la surface d'un objet, cette surface comportant au moins une zone en un polymère fluoré (PF1) contenant des motifs de formule générale (I): 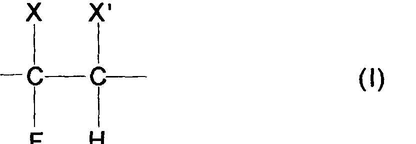 dans laquelle X et X' peuvent être indépendamment l'un de l'autre un atome d'hydrogène, un halogène notamment le fluor ou le chlore, un alkyl perhalogéné notamment perfluoré dans lequel on soumet au moins la zone de cette surface à une déshydrofluoration partielle par contact avec une base, caractérisé en ce que l'on soumet ensuite cette zone surfacique de polymère partiellement déshydrofluoré à un contact avec un agent oxydant pour transformer cette zone surfacique.

Avantageusement, dans le traitement de surface l'objet se présentant sous la forme d'un film, d'une bande, d'une plaque ou d'un tube, au moins une des faces de ce film, bande, plaque ou tube comportant un polymère fluoré est soumise à une déshydrofluoration partielle par contact avec une base, caractérisé en ce qu'une face ayant été soumise à cette déshydrofluoration est soumise ensuite à un contact avec un agent oxydant.

Avantageusement, dans la formule générale (I), X est F et X' est H.

De préférence, le polymère fluoré contenant des motifs de formule générale (I) est du poly(fluorure de vinylidène).

De préférence, l'oxydation est obtenue en milieu aqueux hétérogène par du peroxyde d'hydrogène (H₂O₂) ou par l'anion hypochlorite (ClO-) suite à l'introduction d'un sel de l'acide hypochloreux (ClOM1 ) dans lequel le cation (M1) correspond, par exemple, à un métal alcalin, tel que le sodium ou le potassium. En effet, le peroxyde d'hydrogène en phase aqueuse permet d'avoir un procédé avantageux en minimisant les rejets par rapport à un procédé mettant en oeuvre un solvant organique. Le peroxyde d'hydrogène en phase aqueuse permet également un traitement simplifié des effluents par rapport à d'autres agents oxydants. Les sels de l'acide hypochloreux montrent les mèmes avantages que le peroxyde d'hydrogène par leur possibilité d'utilisation en phase aqueuse, et présentent un avantage particulier en terme de procédé puisqu'ils peuvent ètre introduits, partiellement ou totalement, dès l'étape préliminaire de deshydrofluoration.

Le traitement avec le peroxyde d'hydrogène peut ètre activé en présence d'un catalyseur métallique, tel que le Fer (II) introduit, par exemple sous forme d'halogénures. Suivant le même principe, le traitement avec le sel de l'acide hypochloreux peut ètre pratiqué en présence d'un catalyseur métallique, tel que le Manganèze (III) ou le Nickel (II) associés à différents ligands de types porphyrines, phtalocyanines ou polyamines alkylées. La réaction avec l'anion hypochlorite peut également ètre favorisée par ajout d'un solvant aprotique, tel que l'acétonitrile ou les glymes.

Cependant d'autres agents oxydants, actifs en milieu aqueux, peuvent être utilisés, par exemple, les halogénures de palladium ou de chrome, notamment PdCl₂ et CrCl₂, les permanganates de métaux alcalins, par exemple KMnO₄ les composés peracides, les peroxydes d'alkyle ou les persulfates, éventuellement associés à H₂O₂ ou à des coréactifs activateurs, tels que le métabisulfite de sodium ou de potassium.

Avantageusement, la réaction ou le contact avec H₂O₂ aqueux est pratiqué à un pH allant de 6,5 à 8 et de préférence de 6,7 à 7,6. En effet, pour un pH inférieur à 6,5 la réaction est très lente et pour un pH supérieur à 8 il y a un risque d'emballement de la réaction de décomposition de H₂O₂.

Avantageusement, la réaction ou le contact avec H₂O₂ est réalisé à une température allant de 20°C à 100°C et mieux de 50°C à 90°C.

Avantageusement la quantité totale de H₂O₂ ajouté, calculée sur la base du peroxyde pur est de 1 à 50% en poids par rapport au poids total du milieu réactionnel. De préférence, cette quantité va de 2 à 12%.

Avantageusement, la réaction ou le contact avec l'anion hypochlorite est pratiqué à un pH allant de 6 à 14.

Avantageusement, la réaction ou le contact avec l'anion hypochlorite est réalisé à une température allant de 20 à 100°C, ou mieux de 50 à 90°C.

Avantageusement, la quantité totale d' anion hypochlorite ajouté, calculée sur la base de l'hypochlorite de sodium (ClONa) est de 0.1 à 50% en poids par rapport au poids total du milieu réactionnel. De préférence, cette quantité va de 0,5 à 10%.

Les polymères modifiés suivant le procédé de la présente invention ont des propriétés d'adhésion et de cohésion fortement augmentées par rapport aux polymères fluorés non chimiquement modifiés ou encore par rapport aux polymères fluorés déshydrofluorés selon l'art antérieur ci-dessus rapporté. Ces propriétés améliorées permettent de résoudre le problèmes de délamination des couches chargées d'oxydes mixtes de lithium du type LiMₓO_{y} (dans lequel M est un métal de transition comme Mn, Ni, ou Co) ou chargées de carbones de différents types (graphites ou carbones particuliers utilisés en tant que composés d'intercalation des ions lithium). Ces couches ainsi chargées sont utilisées pour la réalisation respectivement des électrodes positives (pour les charges d'oxydes mixtes) et négatives (pour les charges de carbones) dans les batteries lithium-ion.

Ainsi la présente invention concerne également :
- Une électrode positive pour batterie lithium-ion comprenant une couche comportant un liant des particules d'oxydes mixtes, liant qui est également un agent d'adhésion de la couche au collecteur métallique, caractérisée en ce le liant est un polymère fluoré (PF₂) modifié chimiquement suivant le procédé de la présente invention.
- Une électrode négative pour batterie lithium-ion comprenant une couche comportant un liant des particules de carbone, liant qui est également un agent d'adhésion de la couche au collecteur métallique, caractérisée en ce le liant est un polymère fluoré modifié chimiquement suivant le procédé de la présente invention.

De même cette meilleure adhésion permet d'obtenir un revêtement adhérant mieux à un substrat et notamment un revêtement d'un substrat métallique ou polymérique, caractérisé en ce qu'il est à base d'un polymère fluoré modifié chimiquement suivant le procédé de la présente invention.

Ce revêtement adhérent peut être utilisé comme une couche protectrice externe ou encore comme une couche intermédiaire entre un substrat métallique et une couche externe d'un polymère fluoré.

L'invention sera mieux comprise à l'aide de la partie expérimentale suivante comportant des exemples de réalisations à titre illustratif.

### Partie expérimentale

Dans les exemples suivants on utilise comme produit de départ à titre de polymère fluoré un latex de Poly(fluorure de vinylidène) préparé suivant le procédé en émulsion tel que décrit dans le brevet US 4025709. Ce latex après un séchage à 105°C pendant 24 heures donne une poudre sèche. Cette poudre fondue a une indice de fluidité de 0,6 à 1 g/10 min à 230°C sous 10 kg. Ce latex, dénommé Latex 1 dans la suite de cet exposé, contient 40% en poids de PVDF ; Le procédé suivant la présente invention peut cependant être appliqué notamment à tout latex de PVDF ou copolymère de VF₂ obtenu par un procédé émulsion ou à toute suspension de PVDF ou copolymère de VF₂ obtenu par un procédé suspension.

### Exemple 1 Procédure générale

### a) Etape de deshydrofluoration

On commence à préparer dans un réacteur agité de 20 litres 7,2 kg d'une solution aqueuse de soude à 15 % en poids de NaOH dans de l'eau. On porte cette solution à 70°C puis on y ajoute 7,2 kg du Latex 1 préalablement dilué dans de l'eau désionisée de façon à avoir un extrait sec déterminé, à raison de 0,72 kg/min sous une agitation de 180 tours/min. On obtient alors une émulsion coagulée de couleur marron d'autant plus foncée que la dégradation est avancée. Selon la durée de la réaction de déshydrofluoration, on obtient une fine poudre noire qui devient progressivement insoluble dans les solvants organiques usuels notamment la diméthylformamide (DMF) ou la N-méthylpyrrolidonne (NMP).

### b) Etape de mise en réaction avec un agent oxydant 1-Procédure b/1 : Traitement avec le peroxyde d'hydrogène :

Le milieu réactionnel toujours agité et maintenu à la température de 70°C est acidifié jusqu'à pH = 5 par l'ajout de 2,4 kg environ d'acide nitrique à 65% en poids. On ajoute ensuite 1,68 kg de peroxyde d'hydrogène à 35 % en poids à la vitesse de 0,4 kg/min puis on augmente le pH à une valeur comprise entre 6,7 et 6,9 par ajout d'une solution de soude à 15% de NaOH en poids. On laisse réagir en maintenant le pH entre 6,7 et 6,9 par des ajouts de la même solution de soude. On observe une décoloration progressive de l'émulsion coagulée qui devient ocre à jaune clair.

Le coagulat solide en suspension est filtré pour donner une poudre jaune clair qui est lavée par trois dispersions dans 20 litres d'eau sous agitation et filtrations successives. On obtient ainsi une poudre qui est séchée à l'étuve à 105°C à poids constant

La caractérisation du produit de cette poudre est effectuée en mesurant la viscosité inhérente η en solution dans la DMF et par mesure de l'absorbance à 300 nm par spectroscopie UV en solution dans la NMP.

La viscosité est déterminée avec un viscosimètre capillaire de type UBBELHODE à une température de 30°C à une concentration de 2% en poids de produit dans la DMF. L'absorbance à 300 nm est obtenue par analyse avec un spectrophotomètre PERKIN-ELMER LC-75 en utilisant une concentration de 0,1% en poids de produit dans la NMP. La durée de mise en solution est de 24 heures avant d'effectuer la mesure.

### 2-Procédure b/2 :Traitement à l'hypochlorite de sodium :

Le mileu réactionnel toujours agité et maintenu à la température de 70°C est neutralisé par ajout de 2,4 kg environ d'acide chlorydrique à 36 % en poids. On introduit ensuite 1 kg de solution aqueuse d'hypochlorite de sodium à 13% en poids à la vitesse de 0,2 kg/min. On laisse réagir à 70°C pour observer une décoloration progressive de l'émulsion coagulée qui devient ocre à jaune clair.

Le coagulat solide est isolé et caractérisé suivant un protocole analogue à celui décrit dans la procédure b/1 du même exemple.

### Exemples 2 à 9

Ces essais sont réalisés avec un mode opératoire analogue à celui de l'exemple 1 selon la procédure b/1 de traitement au peroxyde d'hydrogène, avec les différences suivantes :

Pour l'exemple 2, le latex a été directement séché à 105°C, jusqu'à poids constant et lavé selon la procédure indiquée dans l'exemple 1, avant de subir un nouveau séchage à 105°C.

Pour l'exemple 3, le traitement du produit est arrêté après la neutralisation à pH = 5 avec HNO₃ qui suit l'étape de déshydrofluoration par la soude. Le coagulât obtenu est filtré, lavé et séché dans des conditions identiques à l'exemple 1.

Pour tous les exemples 2 à 9, le poids en extrait sec de latex, la durée de la première étape de déshydrofluoration par la soude et la durée de la seconde étape de traitement avec H₂O₂ ont été modifiés.

Les conditions expérimentales et les résultats analytiques de ces exemples 2 à 9 sont rassemblés dans le tableau I.

**TABLEAU I**

| | Déshydrofluoration | | Oxydation | | | |
|---|---|---|---|---|---|---|
| Exemples | Latex 1 émulsion % en poids | Temps de dégradation en min | Durée de traitement en min | Viscosité Inhérente η (ml/g) | Poids de produit sec en kg | Absorbance à 300 nm en solution dans la NMP |
| 2* | 15 | 0 | 0 | 108 | 1,05 | ≅ 0 |
| 3* | 15% | 20 | 0 | 127 | 1,00 | ** |
| 4 | 15% | 20 | 30 | 104 | 0,95 | 0,105 |
| 5 | 30% | 20 | 30 | 108 | 1,95 | 0,115 |
| 6 | 15% | 45 | 45 | 105 | 1,00 | 0,182 |
| 7 | 15% | 20 | 75 | 102 | 0,90 | 0,085 |
| 8 | 15% | 20 | 90 | 101 | 0,90 | 0,080 |
| 9 | 21 | 30 | 90 | 100 | 1,45 | 0,112 |
| 10 | 40 | 30 | 40 | 102 | 1,45 | 0,090 |

| | | | | | | |
|---|---|---|---|---|---|---|
| * exemples comparatifs. | | | | | | |
| ** produit partiellement soluble dams la NMP. | | | | | | |

### Exemple 10

Cet essai est réalisé avec un mode opératoire analogue à celui de l'exemple 1 selon la procédure b/2 de traitement à l'hypochlorite de sodium. Les conditions expérimentales sont spécifiées dans le tableau I.

### Exemple 11

### a) étape de déshydrofluoration

On commence à préparer dans un réacteur agité de 20 l, 7,2 kg de solution aqueuse de soude à 15% en poids à 70°C, puis on y ajoute progressivement 7,2 kg de latex 1 à 40 % en poids à raison de 0,72 kg/min, sous une agitation de 180 tours/min.

On laisse le milieu réactionnel agité pendant 20 min à la température de 70°C.

### b) étape de mise en réaction avec un agent oxydant

Le milieu toujours agité est maintenu à 70°C pendant son acidification progressive par l'ajout de 2,5 kg de HCl à 36% en poids, jusqu'à atteindre le pH de 5 pour la phase liquide. On ajoute ensuite 1,7 1 d'H₂O₂ à 35 % en poids à raison de 0,4 kg/min, et on laisse réagir toujours à 70°C pendant 150 min en ajoutant une solution aqueuse de soude à 15 % en poids de NaOH de manière à maintenir le pH entre 7,3 et 7,6.

On soutire ensuite le coagulat en suspension et on le filtre.

On obtient un gâteau qui est lavé par 3 litres d'eau déionisée.

Le réacteur est lavé par de l'eau qui est éliminée.

On y ajoute 10 litres d'eau déionisée, puis le gâteau précédent sous agitation. On complète le volume de la suspension à 10 litres par ajout d'eau déionisée et on porte l'ensemble à 70°C tout en agitant pendant 20 min.

Après arrêt de l'agitation et décantation pendant 20 min, on soutire les eaux-mères surnageantes et on rajoute 10 litres d'eau déionisée en remettant l'agitation. On arrête et on laisse décanter 20 min. Cette opération de soutirage et de lavage est répétée deux fois supplémentaires puis on vidange le réacteur et on filtre la suspension pour obtenir un gâteau. Ce dernier est lavé par 3 litres d'eau, puis recueilli et séché pendant 24 h à 105°C en étuve. On obtient environ 2,65 kg d'une poudre jaune de PVDF chimiquement modifié.

La viscosité inhérente du produit, mesurée comme décrit précédemment, est de 100 ml/g. Son absorbance à 300 nm en solution dans la NMP mesurée par spectroscopie UV est de 0,176.

### Exemple 12

Préparation d'une électrode positive pour une batterie lithium-ion.

On dissout 2,3 g de PVDF modifié ou non d'un des exemples 2 à 11 dans 50 g de N-méthylpyrrolidinone (Merck, pureté>99%) en chauffant à 50°C et en agitant à l'aide d'une turbine jusqu'à dissolution du polymère. Puis toujours sous agitation, on ajoute 0,5 g de noir de carbone (grade commercial "super-P" de la société MMM Carbon) et 47 g de LiCoO₂ en poudre ( granulométrie moyenne 5µm et de surface spécifique 0,5 m²/g de la société Union minière).

La suspension polymère/NMP/noir de carbone/LiCoO₂ est homogénéisée à la température de 20°C pendant 30 min sous agitation magnétique, puis pendant 3 min dans un disperseur à turbine multipale de marque Dispermat à 2000 tours/min jusqu'à l'obtention d'une pâte homogène et visqueuse. Après refroidissement à la température de 20°C, la pâte a une viscosité de 0,5 Pa.s.

On applique cette pâte sur une feuille d'aluminium ayant une épaisseur de 20 µm, à l'aide d'une racle manuelle "Doctor Blade" réglée à 430 µm. On sèche en étuve ventilée 30 min à 120°C de façon à éliminer pratiquement toute la NMP. Après retour à la température ambiante de 20°C, le bicouche est calandré à froid (2 passages à 2,5 tours/min) afin d'obtenir un film sec de 110 µm d'épaisseur (20 µm d'aluminium et 90 µm de mélange polymère, noir de carbone et sel de Lithium. On obtient un film dans lequel la poudre LiCoO₂ est liée par une matrice de PVDF modifié. Ce film a la composition pondérale suivante :
4,6 % de PVDF,
1,0 % de noir de carbone Super P
94,4 % de LiCoO₂.

Ce film adhère à la feuille d'aluminium pour donner un assemblage bicouche.

On découpe dans cet assemblage des bandes de 25 mm de largeur.

Sur une plaque d'acier de 2 mm d'épaisseur on colle un ruban d'adhésif double-face (TESA 4970) de 25 mm de largeur. Sur la face de ce ruban restée libre par simple pression de la main on fait adhérer la bande de l'assemblage bicouche par sa face LiCoO₂ / PVDF modifié, en superposant la bande sur le ruban. On pèle alors la bande d'aluminium du multicouche obtenu, en la détachant de sa couche sous jacente de LiCoO₂ / PVDF modifié, par pelage à 180°C sur une machine de traction (dynanomètre DY30 de marque ADAMEL LHOMARGY) avec un déplacement de 100 mm/min, les cellules de force utilisées sont de 10 ou 100 N. On mesure la force de pelage obtenue en N/inch. Cette dernière est convertie en N/cm.

Par saisie de la bande d'aluminium la séparation a toujours lieu entre la bande Al et sa couche sous jacente.

Le tableau II rassemble les résultats obtenus avec l'électrode positive d'aluminium.

**Tableau II**

| Mise en oeuvre du polymère obtenu dans l'exemple N° | Force de Pelage mesurée en N/inch | Force de Pelage calculée en N/cm |
|---|---|---|
| 2* | 1,2 | 3,0 |
| 3* | 2,8 | 7,1 |
| 4 | 4,3 | 11,0 |
| 5 | 5,2 | 13,2 |
| 6 | 5,6 | 14,2 |
| 7 | 4,8 | 12,2 |
| 8 | 4,8 | 12,2 |
| 9 | 5,8 | 14,7 |
| 10 | 6,1 | 15,5 |
| 11 | 6,4 | 16,2 |

| | | |
|---|---|---|
| * Exemple comparatif | | |

Ce tableau montre que les valeurs d'adhésion obtenues avec les polymères modifiés suivant le procédé de la présente invention sont nettement supérieures à celles du PVDF non modifié (exemple 2) ou à celle du PVDF seulement déshydrofluoré (exemple 3).

### Exemple 13

Préparation d'une électrode négative pour batterie Lithium-ion.

Cette préparation est analogue à celle de l'exemple précédent.

3 g de PVDF modifié chimiquement ou non modifié d'un des exemples 2 à 11 sont dissous dans 27 g de NMP (Merck, pureté > 99%) à la température de 50°C. A la solution ainsi obtenue on ajoute 27 g de graphite (grade de la société Osaka Sas MCMB 6-28). Cette suspension polymère/NMP/ graphite est homogénéisée à 20° C pendant 30 min sous agitation magnétique, puis pendant 3 min à 2000 tours/min dans un disperseur à turbine multipale (marque Dispermat).

Le mélange est appliqué sous la forme d'un film sur une feuille de cuivre utilisée telle quelle au moyen d'une racle manuelle "Doctor Blade" réglée à 260 µm. Le film est séché à 120°C dans une étuve ventilée pendant 20 min pour éliminer la NMP. La suite est pratiquée de manière identique à la description ci-dessus concernant le bicouche de l'électrode positive.

La préparation des bandes de 25 mm de largeur et le test de pelage sont réalisés de la même façon. La séparation a lieu entre la bande de cuivre et sa couche sous-jacente de graphite et de PVDF modifié ou non.

Avec le PVDF chimiquement modifié obtenu dans l'exemple 9, on obtient une électrode négative qui dans le test de pelage rapporté ci-dessus conduit à la valeur mesurée de 2,60 N/inch soit 6,6 N/cm alors que l'électrode négative préparée avec le PVDF non modifié de l'exemple 2 comparatif est seulement de 0,18 N/inch soit 0,46 N/cm.

L'adhésion est augmentée par un facteur d' environ 14.

### Exemple 14

Préparation d'une plaque métallique revêtue d'une couche de polymère fluoré modifié chimiquement suivant l'invention ou d'un polymère fluoré non modifié.

Une plaque rigide d'aluminium non traité en surface est dégraissée à l'acétone, puis séchée sous vide à 150°C pendant 1 heure.

Par ailleurs, 10 g de PVDF de l'un des exemples 2 à 11 sont dissous dans 40 g de NMP (Merck, pureté > 99%) à l'aide d'un bain-marie à 50°C. La dissolution dure environ 1h 30 min. La solution ainsi obtenue est appliquée sur la plaque métallique au moyen d'une racle manuelle "Doctor Blade" dont l'ouverture est réglée à 1 mm.

Le film obtenu sur la plaque est séché en étuve ventilée à 125°C pendant 1 heure, puis à 200°C pendant 30 min. L'élimination de la NMP est complétée par un séchage du film sous vide à 200°C pendant 30 min.

Des éprouvettes de pelage sont préparées en appliquant une bande de Scotch double face de 25 mm de largeur sur le film de PVDF puis les éprouvettes sont obtenues par des découpes au massicot.

Les tests de pelage sont pratiqués comme ci-dessus, la cellule de force utilisée étant de 100 N.

Avec le PVDF modifié obtenu à l'exemple 9 la force de pelage mesurée est de 47 N/inch soit 119 N/cm alors qu'avec le PVDF non modifié de l'exemple 2 on observe un décollement spontané.

## Revendications

1. Procédé de modification chimique d'un polymère fluoré (PF1) contenant des motifs de formule générale (I) : 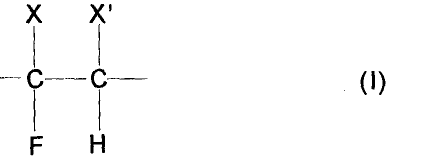 dans laquelle X et X' peuvent être indépendamment l'un de l'autre un atome d'hydrogène, un halogène notamment le fluor ou le chlore, un alkyl perhalogéné notamment perfluoré dans lequel on soumet ce polymère fluoré à une déshydrofluoration partielle par une base, caractérisé en ce que l'on fait réagir ensuite le fluoropolymère ainsi partiellement déshydrofluoré avec un agent oxydant pour donner un nouveau polymère fluoré (PF2).

2. Procédé suivant la revendication 1, caractérisé en ce que le polymère fluoré de départ (PF1) est sous la forme d'une dispersion aqueuse, telle qu'une émulsion ou une suspension.

3. Procédé de modification chimique de la surface d'un objet, cette surface comportant au moins une zone en un polymère fluoré (PF1) contenant des motifs de formule générale (I): 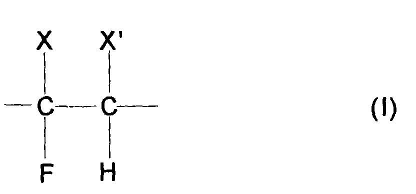 dans laquelle X et X' peuvent être indépendamment l'un de l'autre un atome d'hydrogène, un halogène notamment le fluor ou le chlore, un alkyl perhalogéné notamment perfluoré dans lequel on soumet au moins la zone de cette surface à une déshydrofluoration partielle par contact avec une base, caractérisé en ce que l'on soumet ensuite cette zone surfacique de polymère partiellement déshydrofluoré à un contact avec un agent oxydant pour transformer cette zone surfacique.

4. Procédé suivant la revendication 3, dans laquelle l'objet se présentant sous la forme d'un film, d'une bande, d'une plaque ou d'un tube, au moins une des faces de ce film, bande, plaque ou tube comportant un polymère fluoré est soumise à une déshydrofluoration partielle par contact avec une base, caractérisé en ce qu'une face ayant été soumise à cette déshydrofluoration est soumise ensuite à un contact avec un agent oxydant.

5. Procédé suivant l'une des revendications 1 à 4, caractérisé en ce que X est F et X' est H.

6. Procédé suivant l'une des revendications 1 à 5, caractérisé en ce que le polymère fluoré contenant des motifs de formule générale (I) est du poly(fluorure de vinylidène).

7. Procédé suivant l'une des revendications 1 à 6, caractérisé en ce que l'agent oxydant est du peroxyde d'hydrogène (H₂O₂) en milieu aqueux.

8. Procédé suivant la revendication 7 caractérisé en ce que la réaction ou le contact avec H₂O₂ aqueux est pratiqué à un pH allant de 6,5 à 8.

9. Procédé suivant la revendication 8, caractérisé en ce que le pH est de 6,7 à 7,6.

10. Procédé suivant l'une des revendications 7 à 9, caractérisé en ce que la réaction ou le contact avec H₂O₂ aqueux est réalisé à une température allant de 20°C à 100°C.

11. Procédé suivant la revendication 10, caractérisé en ce que la température est de 50°C à 90°C.

12. Procédé suivant l'une des revendications 1 à 6, caractérisé en ce que l'agent oxydant est de l'hypochlorite en milieu aqueux.

13. Procédé suivant la revendication 12 caractérisé en ce que la réaction ou le contact avec l'hypochlorite est pratiqué à un pH allant de 6 à 14.

14. Procédé suivant l'une des revendications 12 à 13, caractérisé en ce que la réaction ou le contact avec l'hypochlorite aqueux est réalisé à une température allant de 20°C à 100°C.

15. Procédé suivant la revendication 14, caractérisé en ce que la température est de 50°C à 90°C.

16. Electrode positive pour batterie lithium-ion comprenant une couche comportant un liant des particules d'oxydes mixtes, liant qui est également un agent d'adhésion de la couche au collecteur métallique, caractérisée en ce le liant est un polymère fluoré modifié chimiquement suivant le procédé de l'une des revendications 1 à 15.

17. Electrode négative pour batterie lithium-ion comprenant une couche comportant un liant des particules de carbone et/ou de graphite, liant qui est également un agent d'adhésion de la couche au collecteur métallique, caractérisée en ce que le liant est un polymère fluoré modifié chimiquement suivant le procédé de l'une des revendications 1 à 15.

18. Revêtement d'un substrat métallique ou polymérique, caractérisé en ce qu'il est à base d'un polymère fluoré (PF₂) modifié chimiquement suivant le procédé de l'une des revendications 1 à 15.

19. Granulés de polymère fluoré modifié obtenus par humidification puis passage sous contrainte mécanique au travers d'une filière de la poudre obtenue par le procédé de la revendication 2.
